(19) **Europäisches Patentamt / European Patent Office / Office européen des brevets**

(11) **EP 4 674 551 A1**

(12) # EUROPEAN PATENT APPLICATION

(43) Date of publication:
**07.01.2026 Bulletin 2026/02**

(21) Application number: **24186603.7**

(22) Date of filing: **04.07.2024**

(51) International Patent Classification (IPC):
**B23K 9/04** (2006.01)    **B23K 9/173** (2006.01)
**B23K 35/38** (2006.01)    **B23K 103/04** (2006.01)
**B23K 103/10** (2006.01)    **B23K 103/12** (2006.01)

(52) Cooperative Patent Classification (CPC):
**B23K 9/04; B23K 9/173; B23K 35/0261;**
**B23K 35/3053; B23K 35/38; B23K 35/383;**
B23K 2103/04; B23K 2103/10; B23K 2103/12

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
• **KAYA, Cerkez**
  **47805 Krefeld (DE)**
• **SCHMITZ, Michael**
  **47805 Krefeld (DE)**
• **BURMA, Ismail**
  **47805 Krefeld (DE)**

(74) Representative: **Air Liquide**
**L'Air Liquide S.A.**
**Direction de la Propriété Intellectuelle**
**75, Quai d'Orsay**
**75321 Paris Cedex 07 (FR)**

(54) ## WIRE ARC ADDITIVE MANUFACTURING METHOD

(57)    The invention relates to a wire arc additive manufacturing method (WAAM), the method comprising the successive formation of overlying layers from a filler material (1) to produce a shaped body through gas metal arc welding. The method includes the application of a shielding gas (9), the shielding gas comprising a mixed gas of an active gas and an inert gas, wherein the gas composition of the shielding gas (9) is such that an oxygen ($O_2$) content of the shielding gas multiplied by a factor in the range from 2 to 3 plus a carbon dioxide ($CO_2$) content of the shielding gas is in the range of 0.03 to 2 vol%.

Fig. 1

EP 4 674 551 A1

**Description**

TECHNICAL FIELD

The invention relates to a wire arc additive manufacturing method for the additive manufacturing of a workpiece in the form of a shaped body from a filler material.

BACKGROUND OF THE INVENTION

Additive layer manufacturing (ALM), often referred to as "3D printing," is a manufacturing process where a three-dimensional object is created by consecutively adding material layer by layer to form a shaped body.

One ALM technique is wire arc additive manufacturing (WAAM). WAAM is a combination of Gas Metal Arc Welding (GMAW) and additive manufacturing. GMAW is a welding process used for joining metal parts using an electric arc, and additive manufacturing. In the WAAM generative manufacturing process layers of a building material, i.e., a filler material, are deposited on top of each other, until a desired 3d shaped object is created. The filler material is melted with the aid of an arc between a welding torch and a substrate, e.g., a component such as layer previously welded or a building platform. The filler material is continuously fed to and melted by the arc. This results in molten droplets that transition onto the substrate to form a molten pool, solidify, and form a strong bond with the substrate. The filler material can be supplied, for example, as a melting wire electrode of the welding torch, where the arc burns between this wire electrode and the substrate. It is also conceivable to supply the material in the form of an additional wire, which is melted by the arc of the welding torch.

WAAM offers numerous advantages, including high build rates, excellent material utilization, and the ability to create complex geometries. Robots are commonly used for ALM processes, including WAAM. These robots can be equipped with specialized welding heads that allow for the layer-by-layer deposition of material. By using robots, accurate geometries can be achieved, as they enable precise control and movement of the welding head. Additionally, robots can be integrated into automated manufacturing lines, resulting in higher productivity and efficiency.

In gas metal arc welding, including WAAM processes, shielding gas is required during welding to protect the weld pool and the molten metal from atmospheric contamination. When metal is heated during the welding process, it reacts strongly with elements like oxygen ($O_2$) and nitrogen ($N_2$) in the air. If the weld pool is exposed to these elements, it can lead to the formation of oxides, nitrides, and other undesirable compounds, resulting in defects in the weld such as pores, cracks, and reduced mechanical properties. Shielding gas creates a protective atmosphere around the weld area, displacing the surrounding air and preventing it from coming into contact with the molten metal. This keeps the weld pool free from contamination. Typically, an inert gas such as argon (Ar) or helium (He) is used as shielding gas due to its non-reactive nature. Shielding gases are often combined with active gases to leverage the benefits of both gases and enhance welding quality. Active gases like carbon dioxide ($CO_2$) or oxygen ($O_2$) contribute to improving arc stability during the welding process. A stable arc leads to uniform heat transfer and better weld seam quality. Additionally, the addition of active gases can control the penetration depth of the weld pool. In order to achieve the maximum weld pool and penetration depth, protective gas with active gases > 2 vol% is added to argon. The standard in practice are shielding gases with 2-25vol% carbon dioxide or between 2-8vol% oxygen or a combination of carbon dioxide and oxygen in argon. The higher active content ensures a higher penetration, large melting volume and a low viscosity melt. The standard shielding gases are fully adapted to the requirements of joint welding. However, the use of high active gases (carbon dioxide and oxygen) is also connected with consequences such as high surface oxidation, silicates, high spattering, smoke emissions, alloy burn-off and carbon addition. In order to compensate the material burn-off during joint welding, mainly higher alloyed filler materials are used.

In the process of WAAM, there are various requirements that set it apart from conventional joint welding processes. Joint welding involves the process of joining two or more separate metal components together along their edges or surfaces to create a single, continuous piece. In contrast, WAAM focuses on building material layer by layer, where the entire molten pool volume consists of filler metal. This results in much stricter requirements for WAAM compared to joint welding. While joint welding still requires attention to details like controlling penetration depth and minimizing defects, it generally does not demand the same level of precision in liquid melt composition, material transition control, surface cleanliness, or preservation of alloying elements as WAAM. Instead, joint welding focuses on creating strong, durable connections between components, considering factors like bond strength, integrity, and compatibility with surrounding materials. WAAM demands precise control over the liquid melt to ensure stability, necessitating a lower degree of mixing (<5vol%) This means that the melting of the previously welded layer must be minimal in order to form a stable molten pool that minimizes the risk of running or deformation of the component. Minimization of the thermal load on the built-up layers is critical to ensure a uniform structure. This involves carefully managing the heat input during the welding process to prevent excessive heating and subsequent distortion or warping of the workpiece. The material transition, i.e., the droplet detachment from wire in the build-up area should be stable and repeatable. This enables a component buildup close to the final contour. This minimizes the necessary effort for mechanical processing. Furthermore, since the component grows layer by layer, precision and stable material behavior become even more crucial. Any deviation or inconsistency in the deposition process can lead to dimensional inaccuracies or structural weaknesses in the final part.

Until now, the gas mixtures optimized and known for joint welding with high active gas contents such as Ar + 18 vol% $CO_2$ or Ar + 8 vol% $CO_2$ have been used for WAAM. However, these gas mixtures do not adequately meet the high demands imposed by WAAM, particularly in terms of precision, stable material behavior, or preservation of alloying elements. As noted, high active gas contents often lead to significant burn-off of weld metal, resulting in spatter, silicates, smoke, and soot deposition on the weld seam. This necessitates additional work steps such as cleaning and rework. Further, the use of high active gas contents can result in high alloying element losses in the weld area.

Consequently, achieving a uniform microstructure and a uniform alloy composition in the 3D structure of the component becomes unattainable. Further, materials having high oxygen affinity, as used in the WAAM process, tend to experience to burn-off, which compromises the quality of the finished product. Another problem encountered in welding processes is carbon pickup, also known as carburization. Carbon pickup in welding refers to the undesirable increase in the carbon content of the welded material, particularly in the weld metal and the immediate vicinity of the weld joint. The issue with carbon pickup lies in its potential to alter the material composition and microstructure, which can adversely affect the mechanical properties of the welded component. This can lead to changes in hardness, toughness, or other mechanical properties, ultimately impacting the performance and durability of the component.

It is object of the invention to improve the quality and efficiency of WAAM processes.

SUMMARY OF THE INVENTION

The object of the invention is achieved by a method wire arc additive manufacturing method for the additive manufacturing of a shaped object from a filler material as defined in claim 1. Preferred embodiments of the invention are defined in the dependent claims.

According to the invention, the wire arc additive manufacturing method (WAAM) comprises the successive formation of overlying layers from a filler material to produce a shaped body through gas metal arc welding, wherein the successive formation of overlying layers includes feeding the filler material to an arc to be melted by the arc into molten droplets to produce a molten pool and subsequently solidifying the molten pool to produce a first layer, and producing at least one second layer on the first layer by depositing molten droplets of the filler material on the first layer to produce a molten pool and to form the second layer by solidification of the molten pool on the first layer, wherein a shielding gas is applied, the shielding gas comprising a mixed gas of an active gas and an inert gas, wherein the gas composition of the shielding gas is such that an oxygen ($O_2$) content [vol%] of the shielding gas, multiplied by a factor in the range from 2 to 3, plus a carbon dioxide ($CO_2$) content [vol%] of the shielding gas is in the range of 0.03 to 2 vol%.

The requirement for the shielding gas composition can be formulated as follows:

$$0.03 \text{ vol\% to 2 vol\%} = (O_2 \text{ content [vol\%]} \times \text{factor [2 to 3]}) + CO_2 \text{ content [vol\%]}$$

The content [vol%] of one of $O_2$ and $CO_2$ may be zero, meaning the shielding gas may comprise one or both of $O_2$ and $CO_2$.

Preferably, the factor is in the range from 2.3 to 2.5. Most preferably the factor is 2.43. The invention follows, in particular, the fundamental idea of maximizing droplet stability in the WAAM process and optimizing the material transfer from the melting wire (filler material) to the structure/component being built. To ensure stable conditions, the proportion of oxygen and/or carbon dioxide is set to a minimum required level, contrary to common practice.

The limited oxygen and/or carbon dioxide content ensures arc stability. Simultaneously, the composition of the shielding gases offers the following advantages in the WAAM process: It ensures repeatable and stable material transition, defining viscous droplets for better and dimensionally stable modeling. Further, it minimizes energy input in the previously welded layer, resulting in low segregation (< 5%). It also minimizes alloy burning loss, promotes homogeneous microstructure buildup in the part, and reduces the cost of starting materials. Furthermore, it facilitates close-to-final contour build-up, thereby reducing the need for rework and increasing the deposition rate.

In wire arc additive manufacturing (WAAM), the term "filler material" refers to the material that is used, e.g., in the form of wire as a feed for the welding torch to build layers and construct the shaped object layer by layer.

During the successive formation of overlying layers, which are stacked on top of each other, the process of welding a first layer and a second layer is repeated until the desired shaped body is produced. The reference to a first layer and a second layer thus shall reflect the general layer-by-layer welding of a 3D body.

According to a further embodiment of the invention, the filler material is a low-alloyed or unalloyed material. The effective utilization of these materials is made possible particularly by the reduced oxygen and carbon dioxide gas content.

According to a further embodiment of the invention, the inert gas is argon (Ar). Argon, in combination with the reduced oxygen and/or carbon dioxide gas content has been found to be particularly effective in providing a protective atmosphere around the weld area, while ensuring arc stability.

The method according to the invention is applicable to a wide range of materials, in particular pure materials, iron-based alloys such as low-alloyed, unalloyed, and high-alloyed steels and non-ferrous metals such as nickel, nickel-based, copper, aluminum and their alloys can be utilized. Unalloyed materials consist of pure metal without alloying components. Examples include aluminum, copper, Nickel. Low-alloyed steels are iron with a maximum alloying element content of 5 wt%. Examples include low-alloyed steels such as structural steels, heat-resistant steels, tank construction steels, tool steels, etc.. High-alloyed-steels contain more than 5 wt% alloying elements and less than 95 wt% iron. Examples include high-alloyed Chromium-Nickel-Steels (CrNi) ferit-ic, austenitic and duplex steels and as well as austenitic manganese steels (AMS). Non-ferrous metals Nickel-base (Ni-base)-alloys, Copper-base (Cu-base, Aluminum-alloys and Copper-Aluminum-bronze alloys (CuAl-bronze alloys).

It has been discovered that significant enhancements in the WAAM process can be attained by restricting the content of oxygen and/or carbon dioxide to a level that effectively maintains arc stability. This enables the utilization of low-alloyed and unalloyed materials for WAAM processes. Limiting the carbon dioxide gas content effectively prevents problems associated with carbon pickup. Further, restricting, in particular, the oxygen content significantly reduces burn-off, thereby yielding optimal results in additive manufacturing processes.

Furthermore, the following embodiments of the invention provide gas compositions that have proven to be particularly advantageous for specific materials and alloys.

According to a further embodiment of the invention, the filler material is a low-alloyed or unalloyed material.

According to a further embodiment of the invention, the inert gas is argon (Ar).

According to a further embodiment of the invention, argon is exclusively used as the inert gas or wherein the inert gas at least predominantly consists of argon (Ar).

The expression predominantly means at least the fraction in question is larger than any other fraction. That is, in the present embodiment the argon fraction is at least 50 vol%.

According to a further embodiment of the invention, the filler material comprises high-alloyed compositions with less than 95 wt% iron, in particular high-alloyed CrNi steel and/or high-alloyed Ni-base-alloy and the gas composition, comprises:

a) Ar; and

b) $CO_2$ and/or $O_2$ in the range from 0.04 to 0.8vol%, preferably in the range from 0.1 to 0.4 vol%.

According to a further embodiment of the invention, the filler material comprises high-alloyed CrNi austenitic and duplex steel, and the gas composition comprises:

a) Ar;

b) $N_2$ in the range from 1 to 8 vol%, preferably in the range from 2 to 6 vol%; and

c) $CO_2$ and/or $O_2$ in the range from 0.04 to 0.8 vol%, preferably in the range from 0.1 to 0.4 vol%.

According to a further embodiment of the invention, the filler material comprises non-ferrous materials such as Ni-base, Cu-base and/or CuAl-bronze alloys, and the gas composition comprises:

a) Ar; and

b) $CO_2$ and/or $O_2$ in the range from 0.03 to 0.8 vol%, preferably in the range from 0.05 to 0.5 vol%.

According to a further embodiment of the invention, the filler material comprises non-ferrous materials such as Ni-base alloy, and the gas composition comprises:

a) Ar;

b) $N_2$ in the range from 1 to 8 vol%, preferably in the range from 2 to 6 vol%; and

c) $CO_2$ and/or $O_2$ in the range from 0.04 to 0.8 vol%, preferably in the range from 0.06 to 0.6 vol%.

According to a further embodiment of the invention, the filler material comprises comprises high-alloyed compositions with less than 95 wt% iron, in particular high-alloyed CrNi steel and/or high-alloyed Ni-base-alloy, and the gas composition comprises:

a) Ar;

b) $H_2$ in the range from 0.3 to 2.2 vol%, preferably in the range from 0.5 to 2 vol%;

c) $N_2$ in the range from 1 to 8 vol%, preferably in the range from 2 to 6 vol%; and

d) $CO_2$ in the range from 0.03 to 0.8 vol%, preferably in the range from 0.05 to 0.5 vol%.

According to a further embodiment of the invention, the filler material comprises aluminum and/or aluminum alloys and the gas composition comprises:

a) Ar; and

b) $CO_2$ in the range from 0.03 to 1 vol%, preferably in the range from 0.03 to 0.05 vol%.

According to a further embodiment of the invention, the filler material comprises austenitic manganese steel, and the gas composition comprises:

a) Ar;

b) $N_2$ in the range from 1 to 8 vol%, preferably in the range from 2 to 6 vol%; and

c) $CO_2$ in the range from 0.03 to 0.8 vol%, preferably in the range from 0.05 to 0.5 vol%.

According to a further embodiment of the invention, the factor is in the range from 2.3 to 2.5, preferably the factor is 2.43.

BRIEF DESCRIPTION OF THE FIGURE

The invention will now be described referring to an exemplary embodiment shown in the figure which illustrates the forming of a shaped body according to one embodiment of the invention.

In the illustrated WAAM process, the starting material, referred to herein as the filler material, is fed in the form of a wire feedstock of high-alloyed CrNi austenitic and duplex steel. During the welding operation, the wire 1 is continuously fed from a wire feeder 2 of a welding torch 3 to an arc, where it encounters the intense heat of the electric arc 4. As a result of this heat, the wire 1 melts, forming molten droplets of metal.

To produce a shaped body, at first, the welding torche 3 moves along a substrate 5 (here: a building platform) and molten droplets are deposited on the substrate 5 to form a first layer 6. Upon reaching the substrate 5, the molten droplets form a molten pool. The molten pool rapidly cools and solidifies and form a first layer 6, which provides a foundation layer of the shaped body. When the first layer 6 is deposited, the welding torch starts depositing molten droplets of metal on the first layer 6 and moves systematically across the substrate 5 depositing additional layers of molten droplets on top of the previously formed layer 6 to form a further, second layer 7. This layer-by-layer deposition process, where a second layer is welded on a previously welded first layer, repeats, gradually building up the component to its final shape and dimensions.

Accordingly, the layer 8 shown in the figure is welded by the wire 1 being continuously fed into the arc 4, resulting in the formation of molten metal droplets, while simultaneously moving welding torch 3 relative to the substrate 5, as indicated by the arrow. During this movement, the molten droplets are deposited on the previously deposited layer to form a molten pool, which solidifies to form layer 8. As each droplet solidifies, it becomes part of the growing layer, contributing to the overall structure of the shaped body. Over time, the deposited droplets build up to form successive layers, ultimately creating the final shape of the shaped body.

Throughout the welding process, a shielding gas 9 is directed around the electric arc 4 and the molten metal pool to protect them from atmospheric contamination. The shielding gas is composed of the inert gas argon (Ar) and further active gas contents. For high-alloyed CrNi austenitic and duplex steel, it is most preferred that the active gas contents include $N_2$ in the range from 2 to 6 vol% and $CO_2$ and/or $O_2$ in the range from 0.1 to 0.4 vol%, wherein the gas composition of the shielding gas 9 is such that the $O_2$ content of the shielding gas multiplied by 2.43 plus the $CO_2$ content of the shielding gas is in the range of 0.03 to 2 vol%.

**Reference numerals**

1    wire
2    wire feeder
3    welding torch
4    arc
5    substrate (building platform)
6    first layer
7    second layer
8    present layer
9    shielding gas

**Claims**

1. Wire arc additive manufacturing method (WAAM), the method comprising the successive formation of overlying layers from a filler material (1) to produce a shaped body through gas metal arc welding,

   wherein the successive formation of overlying layers (6, 7) includes feeding the filler material (1) to an arc (4) to be melted by the arc (4) into molten droplets to produce a molten pool and subsequently solidifying the molten pool to produce a first layer (6), and producing at least one second layer (7) on the first layer (6) by depositing molten droplets of the filler material on the first layer (6) to form a molten pool and to form the second layer (6) by solidification of the molten pool on the first layer (6),
   wherein a shielding gas (9) is applied, the shielding gas (9) comprising a mixed gas of an active gas and an inert gas, and
   wherein the gas composition of the shielding gas (9) is such that an oxygen ($O_2$) content of the shielding gas multiplied by a factor in the range from 2 to 3 plus a carbon dioxide ($CO_2$) content of the shielding gas is in the range of 0.03 to 2 vol%.

2. Method according to claim 1, wherein the filler material is a low-alloyed or unalloyed material.

3. Method according to claim 1 or 2, wherein the inert gas is argon (Ar).

4. Method according to claim 3, wherein argon is exclusively used as the inert gas or wherein the inert gas at least predominantly consists of argon (Ar).

5. Method according to any one of claims 1 to 4, wherein the filler material comprises high-alloyed compositions with less than 95 wt% iron, in particular high-alloyed CrNi steel and/or high-alloyed Ni-base-alloy and the gas composition, comprises:

   a) Ar; and
   b) $CO_2$ and/or $O_2$ in the range from 0.04 to 0.8 vol%, preferably in the range from 0.1 to 0.4 vol%.

6. Method according to any one of claims 1 to 4, wherein the filler material (1) comprises high-alloyed CrNi austenitic and duplex steel, and the gas composition comprises:

   a) Ar;
   b) $N_2$ in the range from 1 to 8 vol%, preferably in the range from 2 to 6 vol%; and
   c) $CO_2$ and/or $O_2$ in the range from 0.04 to 0.8 vol%, preferably in the range from 0.1 to 0.4 vol%.

7. Method according to any one of claims 1 to 4, wherein the filler material (1) comprises non-ferrous materials such as Ni-base, Cu-base and/or CuAl-bronze alloys, and the gas composition comprises:

   a) Ar; and
   b) $CO_2$ and/or $O_2$ in the range from 0.03 to 0.8 vol%, preferably in the range from 0.05 to 0.5 vol%.

8. Method according to any one of claims 1 to 4, wherein the filler material (1) comprises non-ferrous materials such as Ni-base alloy, and the gas composition comprises:

   a) Ar;
   b) $N_2$ in the range from 1 to 8 vol%, preferably in the range from 2 to 6 vol%; and

c) $CO_2$ and/or $O_2$ in the range from 0.04 to 0.8 vol%, preferably in the range from 0.06 to 0.6 vol%.

9. Method according to any one of claims 1 to 4, wherein the filler material (1) comprises high-alloyed compositions with less than 95 wt% iron, in particular high-alloyed CrNi steel and/or high-alloyed Ni-base-alloy, and the gas composition comprises:

   a) Ar;
   b) $H_2$ in the range from 0.3 to 2.2 vol%, preferably in the range from 0.5 to 2 vol%;
   c) $N_2$ in the range from 1 to 8 vol%, preferably in the range from 2 to 6 vol%; and
   d) $CO_2$ in the range from 0.03 to 0.8 vol%, preferably in the range from 0.05 to 0.5 vol%.

10. Method according to any one of claims 1 to 4, wherein the filler material (1) comprises aluminum and/or aluminum alloys and the gas composition comprises:

    a) Ar; and
    b) $CO_2$ in the range from 0.03 to 1 vol%, preferably in the range from 0.03 to 0.05 vol%.

11. Method according to any one of claims 1 to 4, wherein the filler material (1) comprises austenitic manganese steel, and the gas composition comprises:

    a) Ar;
    b) $N_2$ in the range from 1 to 8 vol%, preferably in the range from 2 to 6 vol%; and
    c) $CO_2$ in the range from 0.03 to 0.8 vol%, preferably in the range from 0.05 to 0.5 vol%.

12. Method according to any of the preceding claims, wherein the factor is in the range from 2.3 to 2.5, preferably the factor is 2.43.

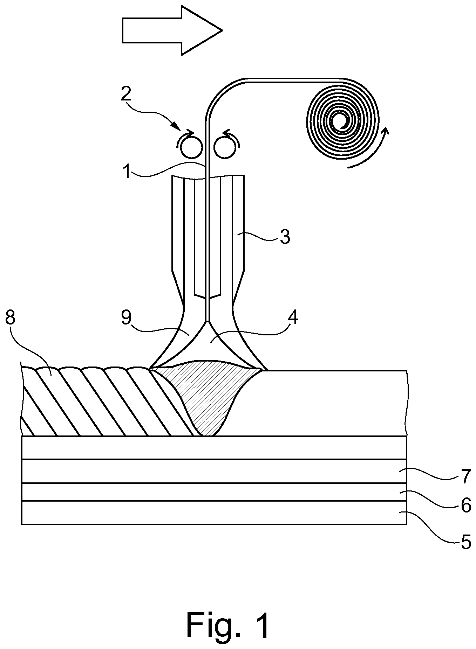

Fig. 1

Europäisches
Patentamt
European
Patent Office
Office européen
des brevets

# EUROPEAN SEARCH REPORT

**Application Number**

EP 24 18 6603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/079200 A2 (LINDE AG [DE]; VELDSMAN WALTER MARK [GB]) 4 June 2015 (2015-06-04) * page 8, line 5 - line 7; claims 1, 2, 5, 7, 8, 9, 10, 13 * | 1-4,12 | INV. B23K9/04 B23K9/173 B23K35/38 B23K103/04 B23K103/10 B23K103/12 |
| X | EP 3 781 344 B1 (AML3D LTD [AU]) 15 November 2023 (2023-11-15) * claims 1, 3, 4, 7 * | 1-4,12 | |
| X | CN 112 899 575 A (CENTRAL IRON & STEEL RES INST) 4 June 2021 (2021-06-04) * claims 1, 2 * | 1,3,4,12 | |
| X | DE 10 2020 105122 A1 (FLOTTWEG SE [DE]) 3 September 2020 (2020-09-03) * paragraphs [0015], [0017], [0019]; claims 1, 2, 5 * | 1,3,4,12 | |
| X | DE 10 2007 013802 A1 (PANGAS [CH]) 25 September 2008 (2008-09-25) * paragraphs [0001], [0005], [0017], [0019]; claims 8, 10 * | 1-4,12 | TECHNICAL FIELDS SEARCHED (IPC) B23K |
| X | US 2021/053275 A1 (BURKE PAUL [US] ET AL) 25 February 2021 (2021-02-25) * paragraphs [0089], [0092] * | 1-4,12 | |

The present search report has been drawn up for all claims

| Place of search | Date of completion of the search | Examiner |
|---|---|---|
| The Hague | 20 December 2024 | Péridis, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 24 18 6603

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-4, 12(all partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**

**SHEET B**

The Search Division considers that the present European patent application does not comply with the requirements of unity of invention and relates to several inventions or groups of inventions, namely:

```
    1. claims: 1-4, 12(all partially)

        Wire arc additive manufacturing method, wherein the filler
        is a low-alloyed or unalloyed material.
                        ---

    2. claims: 5, 6, 9, 11(completely); 1, 3, 4, 12(partially)

        Wire arc additive manufacturing method, wherein the filler
        comprises high-alloyed compositions with less than 95 wt%
        iron.
                        ---

    3. claims: 7, 8, 10(completely); 1-4, 12(partially)

        Wire arc additive manufacturing method, wherein the filler
        comprises non-ferrous materials.
                        ---
```

## ANNEX TO THE EUROPEAN SEARCH REPORT
## ON EUROPEAN PATENT APPLICATION NO.

EP 24 18 6603

This annex lists the patent family members relating to the patent documents cited in the above-mentioned European search report.
The members are as contained in the European Patent Office EDP file on
The European Patent Office is in no way liable for these particulars which are merely given for the purpose of information.

20-12-2024

| Patent document cited in search report | Publication date | Patent family member(s) | | Publication date |
|---|---|---|---|---|
| WO 2015079200 A2 | 04-06-2015 | CN | 105829013 A | 03-08-2016 |
| | | EP | 3074169 A2 | 05-10-2016 |
| | | US | 2017165781 A1 | 15-06-2017 |
| | | WO | 2015079200 A2 | 04-06-2015 |
| EP 3781344 B1 | 15-11-2023 | AU | 2019251514 A1 | 28-05-2020 |
| | | EP | 3781344 A1 | 24-02-2021 |
| | | ES | 2964623 T3 | 08-04-2024 |
| | | JP | 7225501 B2 | 21-02-2023 |
| | | JP | 2021518811 A | 05-08-2021 |
| | | KR | 20200135281 A | 02-12-2020 |
| | | NZ | 764390 A | 30-07-2021 |
| | | SG | 11201909477S A | 28-11-2019 |
| | | US | 2021016381 A1 | 21-01-2021 |
| | | US | 2023144822 A1 | 11-05-2023 |
| | | WO | 2019195877 A1 | 17-10-2019 |
| CN 112899575 A | 04-06-2021 | NONE | | |
| DE 102020105122 A1 | 03-09-2020 | NONE | | |
| DE 102007013802 A1 | 25-09-2008 | NONE | | |
| US 2021053275 A1 | 25-02-2021 | CN | 112423918 A | 26-02-2021 |
| | | EP | 3768449 A1 | 27-01-2021 |
| | | JP | 2021518285 A | 02-08-2021 |
| | | US | 2021053275 A1 | 25-02-2021 |
| | | WO | 2019182989 A1 | 26-09-2019 |

EPO FORM P0459

For more details about this annex : see Official Journal of the European Patent Office, No. 12/82